# EUROPÄISCHE PATENTSCHRIFT

(11) **EP 0 633 222 B1**
(45) Veröffentlichungstag und Bekanntmachung des Hinweises auf die Patenterteilung: **11.09.1996**
(21) Anmeldenummer: 94109815.4
(22) Anmeldetag: 24.06.1994
(51) Int. Cl.: C01B 25/08, C01B 35/08, C01B 35/14, C01B 35/18, C09K 3/14

(54) **Ternäre Elementverbindungen im System Al-B-P, Verfahren zu deren Herstellung und deren Verwendung**
Ternary compounds in the system Al-B-P, process for the preparation thereof and use thereof
Composés ternaires dans le système Al-B-P, procédé de leur préparation et leur utilisation

(30) Priorität: 07.07.1993 DE 4322579
(43) Veröffentlichungstag der Anmeldung: 11.01.1995
(73) Patentinhaber: BAYER AG, 51368 Leverkusen (DE)
(72) Erfinder: Perchenek, Nils, Dr., D-51373 Leverkusen (DE)

(56) Entgegenhaltungen:
- DE-C- 1 124 027

## Beschreibung

Die vorliegende Erfindung betrifft ternäre Elementverbindungen im System Al-B-P, Verfahren zur Herstellung dieser Verbindungen sowie deren Verwendung.

Ternäre Elementverbindungen im System Al-B-P sind bislang nicht bekannt geworden. In Ullmann's Encyclopedia of Industrial Chemistry, 5th Ed., Vol. A4, S.303ff. werden als binäre Phasen in den Systemen Al-B und B-P die Verbindungen AlB₂, AlB₁₂, BP, B₁₂P₂ und B₁₃P₂ genannt. Von diesen findet AlB₁₂ in Verbindung mit Hartmetallen Verwendung in Schneidwerkzeugen. In der DE-A 1 124 027 wird der Einsatz von BP für Schleifanwendungen vorgeschlagen, in der US-A 3 286 411 die Herstellung von Schleifsteinen aus oxidgebundenem B₁₃P₂ beschrieben. Als Nachteile der binären Verbindungen sind jedoch eine vergleichsweise geringe Härte des AlB₁₂ bzw. unbefriedigende mechanische Eigenschaften bei den Borphosphiden zu nennen.

Aufgabe der Erfindung ist die Bereitstellung neuartiger Verbindungen, die als Hartstoffe eingesetzt werden können, sowie Verfahren zur Herstellung dieser Verbindungen in variablen Teilchengrößen.

Die Anforderungen werden durch die folgenden neuartigen Verbindungen erfüllt, die Gegenstand dieser Erfindung sind. Es handelt sich dabei um ternäre Elementverbindungen der Elemente Aluminium, Bor und Phosphor.

In einer bevorzugten Ausführungsform liegt in den erfindungsgemäßen ternären Elementverbindungen jedes Element im Bereich von 1 bis 98 Mol% vor.

Bevorzugt liegt in den erfindungsgemäßen ternären Elementverbindungen Bor zu mindestens 50 Mol% vor. Besonders große Härten zeigen Verbindungen, in denen Bor zu mindestens 85 Mol% vorliegt. Unter diesen findet man Verbindungen, die überwiegend aus ikosaedrischen B₁₂-Einheiten bestehen, zwischen denen sich Aluminium-, Phosphor- und gegebenenfalls Boratome befinden. Diese zeichnen sich durch eine extreme Widerstandsfähigkeit gegen chemischen Angriff aus; sie sind z.B. gegen konzentrierte Säuren und sogar gegen Königswasser beständig und werden in kristalliner Form auch durch Alkalischmelzen nur langsam angegriffen. Bei der Untersuchung dieser Verbindungen mittels Röntgenbeugung findet man meist eine Elementarzelle mit rhomboedrischer Symmetrie, da die Kristallstruktur dieser Phasen eine enge Verwandschaft zu der des α-rhomboedrischen Bors zeigt.

In einer bevorzugten Ausführungsform beträgt die durchschnittliche Partikelgröße der erfindungsgemäßen ternären Elementverbindungen mehr als 80µm. Dies ist besonders für einen Einsatz der Verbindungen in Schleifmitteln von Bedeutung, da für die meisten technischen Anwendungen grobkörniges Material benötigt wird.

Gegenstand dieser Erfindung sind weiterhin Verfahren zur Herstellung der erfindungsgemäßen ternären Elementverbindungen.

Zur Herstellung der erfindungsgemäßen ternären Elementverbindungen können Mischungen von Aluminiumphosphid und elementarem Bor oder Aluminiumphosphid und Borphosphid oder Aluminiumphosphid und Borphosphid und elementarem Bor in einer Matrix aus flüssigem Aluminium zur Reaktion gebracht werden. In einer bevorzugten Ausführungsform wird dabei die Reaktion bei Temperaturen zwischen 1100°C und 1800°C durchgeführt. Besonders gute Resultate werden erzielt, wenn die Abkühlraten nach Beendigung der Reaktion zwischen 0.1 und 30 K/min betragen. Zur Darstellung grobkörnigen Materials ist es vorteilhaft, das Gewichtsverhältnis von Aluminiummatrix und Eduktmischung größer als vier zu wählen. Das Aluminium wird zweckmäßigerweise in Form von Granalien oder Nadeln eingesetzt. Die Verwendung feiner Pulver hat sich nicht bewährt, da die anhaftende Oxidschicht die Bildung der Aluminiumschmelze erschwert. Um die Oxidbildung zu vermeiden, ist es günstig, die Reaktion unter Inertgas auszuführen. Als Tiegelmaterialien für die Durchführung der Reaktion haben sich insbesondere Aluminiumoxid oder Titandiborid bewährt.

Durch die Wahl der Reaktionstemperatur, der Abkühlrate und der Konzentration der Edukte in der Aluminiumschmelze läßt sich die Partikelgröße des erhaltenen Produkts variieren. Das Mischungsverhältnis der Edukte steuert die Zusammensetzung der erhaltenen ternären Elementverbindungen.

Gegenstand der Erfindung ist auch die Verwendung der erfindungsgemäßen ternären Elementverbindungen als Schleifkörner in Schleifmitteln.

Im folgenden ist die Erfindung beispielhaft erläutert, ohne daß hierin eine Einschränkung zu sehen ist.

### Beispiel 1:

2.27g amorphes Bor, 1.25g Borphosphid und 0.58g Aluminiumphosphid wurden mit 25g Aluminiumspänen vermischt und im Rohrofen unter Argonatmosphäre auf 1600°C erhitzt. Nach 1h Reaktionszeit wurde die Mischung mit 1K/min auf Raumtemperatur abgekühlt. Die Aluminiummatrix wurde mit halbkonzentrierter Salzsäure aufgelöst, der Rückstand mehrere Stunden lang mit heißem Königswasser behandelt.
Es wurden 3.76g Produkt in Form großer, metallisch-schwarzer Kristalle erhalten. Die Elementaranalyse ergab 71.3% Bor, 26.0% Phosphor, 2.6% Aluminium, entsprechend einer Zusammensetzung Al_{0.18}B_{12.26}P_{1.55}. Die elektronendispersive Röntgenanalyse zeigte bis zur Auflösungsgrenze von 500nm eine homogene Verteilung von Aluminium und Phosphor in den Kristallen. Röntgendiffraktometrisch wurde eine rhomboedrische Elementarzelle mit den Gitterkonstanten a=5.963(1)Å und c=11.872(1)Å ermittelt. Die Vickershärte des Materials, gemessen mit einer Prüflast von 2 N, betrug 34 GPa.

### Beispiel 2:

1.30g amorphes Bor, 0.42g Borphosphid und 0.58g Aluminiumphosphid wurden mit 20g Aluminiumspänen vermischt und im Rohrofen unter Argonatmosphäre auf 1650°C erhitzt. Nach 1h Reaktionszeit ließ man die Mischung mit 2K/min auf Raumtemperatur abkühlen. Die Aluminiummatrix wurde mit halbkonzentrierter Salzsäure aufgelöst, der Rückstand mehrere Stunden lang mit heißem Königswasser behandelt.
Es wurden 1.86g Produkt in Form metallisch-schwarzer Kristalle erhalten.
Die Elementaranalyse ergab 68.0% Bor, 27.4% Phosphor, 4.4% Aluminium, entsprechend einer Zusammensetzung Al_{0.3}B_{12.0}P_{1.7}. Die elektronendispersive Röntgenanalyse zeigte bis zur Auflösungsgrenze von 500nm eine homogene Verteilung von Aluminium und Phosphor in den Kristallen. Als Vickershärte des Materials wurde bei einer Prüflast von 2N ein Wert von 33 GPa gemessen.

## Patentansprüche

1. Ternäre Elementverbindungen, dadurch gekennzeichnet, daß die Elemente Aluminium, Bor und Phosphor sind.

2. Ternäre Elementverbindungen gemäß Anspruch 1, dadurch gekennzeichnet, daß jedes Element im Bereich von 1 bis 98 Mol% vorliegt.

3. Ternäre Elementverbindungen gemäß einem der Ansprüche 1 oder 2, dadurch gekennzeichnet, daß das Bor zu mindestens 50 Mol% vorliegt.

4. Ternäre Elementverbindungen gemäß einem oder mehreren der Ansprüche 1 bis 3, dadurch gekennzeichnet daß das Bor zu mindestens 85 Mol% vorliegt.

5. Ternäre Elementverbindungen gemaß Anspruch 4, dadurch gekennzeichnet, daß sie überwiegend aus ikosaedrischen B₁₂-Einheiten bestehen, zwischen denen sich Aluminium-, Phosphor- und gegebenenfalls Boratome befinden.

6. Ternäre Elementverbindungen gemäß Anspruch 4, dadurch gekennzeichnet, daß sie rhomboedrische Kristallsymmetrie aufweisen.

7. Ternäre Elementverbindungen gemäß einem oder mehreren der Ansprüche 1 bis 6, dadurch gekennzeichnet, daß die durchschnittliche Partikelgröße mehr als 80µm beträgt.

8. Verfahren zur Herstellung der ternären Elementverbindungen gemäß einem oder mehreren der Ansprüche 1 bis 7, dadurch gekennzeichnet, daß Mischungen von Aluminiumphoshid und Bor oder Aluminiumphosphid und Borphoshid oder Aluminiumphosphid und Bor und Borphosphid in flüssigem Aluminium zur Reaktion gebracht werden.

9. Verfahren gemäß Anspruch 8, dadurch gekennzeichnet, daß die Reaktion bei Temperaturen zwischen 1100°C und 1800°C durchgeführt wird.

10. Verfahren gemäß Anspruch 8 und 9, dadurch gekennzeichnet, daß die Abkühlraten nach Beendigung der Reaktion zwischen 0.1 und 30 K/min betragen.

11. Verfahren gemäß einem oder mehreren der Ansprüche 8 bis 10, dadurch gekennzeichnet, daß das Gewichtsverhältnis von Aluminiummatrix und Eduktmischung größer als vier ist.

12. Verwendung der ternären Elementverbindungen gemäß einem oder mehreren der Ansprüche 1 bis 11 als Schleifkörner in Schleifmitteln.

## Claims

1. Ternary elemental compounds, characterised in that the elements are aluminium, boron and phosphorus.

2. Ternary elemental compounds according to claim 1, characterised in that each element is present in the range of from 1 to 98 mol%.

3. Ternary elemental compounds according to claims 1 or 2, characterised in that boron is present in a quantity of at least 50 mol%.

4. Ternary elemental compounds according to one or more of claims 1 to 3, characterised in that boron is present in a quantity of at least 85 mol%.

5. Ternary elemental compounds according to claim 4, characterised in that they consist predominantly of icosahedral B₁₂ units, between which are situated aluminium atoms, phosphorus atoms and optionally boron atoms.

6. Ternary elemental compounds according to claim 4, characterised in that they possess a rhombohedral crystal symmetry.

7. Ternary elemental compounds according to one or more of claims 1 to 6, characterised in that the average particle size is more than 80 µm.

8. Method for the preparation of ternary elemental compounds according to one or more of claims 1 to 7, characterised in that mixtures of aluminium phosphide and boron or aluminium phosphide and boron phosphide or aluminium phosphide and boron and boron phosphide are caused to react in liquid aluminium.

9. Method according to claim 8, characterised in that the reaction is carried out at temperatures of between 1100°C and 1800°C.

10. Method according to claim 8 and 9, characterised in that the cooling rates after ending the reaction are between 0.1 and 30 K/min.

11. Method according to one or more of claims 8 to 10, characterised in that the weight ratio of aluminium matrix and educt mixture is greater than four.

12. Use of the ternary elemental compounds according to one or more of claims 1 to 11 as abrasive grains in abrasive materials.

## Revendications

1. Composés de trois éléments, caractérisés en ce que les éléments sont l'aluminium, le bore et le phosphore.

2. Composés ternaires selon la revendication 1, caractérisés en ce que chacun de éléments est présent en proportions de 1 à 98 mol %.

3. Composés ternaires selon l'une des revendications 1 ou 2, caractérisés en ce que le bore est présent en proportions d'au moins 50 mol %.

4. Composés ternaires selon une ou plusieurs des revendications 1 à 3, caractérisés en ce que le bore est présent en proportions d'au moins 85 mol %.

5. Composés ternaires selon la revendication 4, caractérisés en ce qu'ils consistent principalement en motifs icosaédriques B₁₂ entre lesquels se trouvent des atomes d'aluminium, de phosphore et le cas échéant de bore.

6. Composés ternaires selon la revendication 4, caractérisés en ce qu'ils présentent une symétrie cristalline rhomboédrique.

7. Composés ternaires selon une ou plusieurs des revendications 1 à 6, caractérisés en ce que la dimension de particule moyenne est supérieure à 80 µm.

8. Procédé de préparation des composés ternaires selon une ou plusieurs des revendications 1 à 7, caractérisé en ce que l'on fait réagir des mélanges de phosphure d'aluminium et de bore ou de phosphure d'aluminium et de phosphure de bore ou de phosphure d'aluminium, de bore et de phosphure de bore dans l'aluminium fondu.

9. Procédé selon la revendication 8, caractérisé en ce que la réaction est réalisée à des températures de 1100°C à 1800°C.

10. Procédé selon les revendications 8 et 9, caractérisé en ce que, après la réaction, la vitesse de refroidissement est de 0,1 à 30 K/min.

11. Procédé selon une ou plusieurs des revendications 8 à 10, caractérisé en ce que les proportions relatives en poids entre la gangue d'aluminium et le mélange des matières premières sont supérieures à 4.

12. Utilisation des composés ternaires selon une ou plusieurs des revendications 1 à 11 sous forme de grains abrasifs dans des produits de meulage.
